Europäisches Patentamt

European Patent Office

Office européen des brevets

(11) Veröffentlichungsnummer: **0 240 768 B1**

# EUROPÄISCHE PATENTSCHRIFT

(45) Veröffentlichungstag der Patentschrift: **27.02.91**

(21) Anmeldenummer: **87103626.5**

(22) Anmeldetag: **12.03.87**

(51) Int. Cl.⁵ **B61D 3/08**, B61D 45/00, B62D 33/033, B62D 27/06

(54) **Transportsicherung.**

(30) Priorität: **11.04.86 DE 3612257**

(43) Veröffentlichungstag der Anmeldung:
**14.10.87 Patentblatt 87/42**

(45) Bekanntmachung des Hinweises auf die
Patenterteilung:
**27.02.91 Patentblatt 91/09**

(84) Benannte Vertragsstaaten:
**BE DE FR LU NL**

(56) Entgegenhaltungen:
**DE-A- 1 655 572**
**DE-A- 3 115 362**
**DE-C- 574 169**
**DE-C- 824 803**
**US-A- 4 042 275**

(73) Patentinhaber: **Hoesch Aktiengesellschaft**
**Eberhardstrasse 12**
**D-4600 Dortmund 1(DE)**

(72) Erfinder: **Willmes, Paul-Günther, Dipl.-Ing.**
**Krinkelweg 47 c**
**D-4600 Dortmund 30(DE)**

EP 0 240 768 B1

Rank Xerox (UK) Business Services

## Beschreibung

Transportsicherung

Die Erfindung betrifft eine Transportsicherung in Form von Rungen für Eisenbahnwagen, Lastkraftwagen oder dergleichen, wobei die Rungen aus zwei zusammengesetzten Profilen bestehen.

Bekannt sind Rungen-Konstruktionen unterschiedlicher Bauart und Herstellungstechnik. Die DE-C-574 169 beschreibt eine Transportsicherung in Form von Rungen für Eisenbahnwagen, wobei mehrere nebeneinanderliegende Einzelrohre zu einer Einheit zusammengesetzt sind. Diese bekannten Rungen können aber nur jeweils in einer einzigen definierten Position am Eisenbahnwagen eingesetzt werden, da sie jeweils aus von unten nach oben verjüngten Rohren bestehen, die starr miteinander verbunden sind. Die DE-C-824 800 zeigt eine Runge, die im Preßverfahren aus einem speziell zugeschnittenen Stahlblech geformt ist. Diese Runge kann ebenfalls infolge ihrer konstruktiven Ausbildung nur in einer einzigen definierten Position am Waggon eingesetzt werden.

Außerdem ist aus der DE-A-1 655 572 eine Runge bekannt, die aus zwei ineinandergesteckten U-förmigen Metallprofilen besteht, wobei am unteren Ende der Runge Querstege angeordnet sind, die in die Ladefläche einschiebbar und in dieser in Querträgern verriegelbar sind. Diese bekannte Runge kann aber auch nur in einer einzigen definierten Position an der Ladefläche eines Rungenwagens angebracht werden.

Bekannt sind weiterhin Rungen-Konstruktionen, welche im Schmiedeverfahren als massiver Querschnitt hergestellt werden und mittels Achszapfen drehbar am Transportmittel befestigt sind.

Von daher liegt der Erfindung die Aufgabe zugrunde, eine Transportsicherung der eingangs genannten Art zu schaffen, die den statischen Erfordernissen mit einem Minimum an Materialeinsatzgewicht gerecht wird, gleichzeitig in jeder von vier möglichen Einbaupositionen gleichwertig eingesetzt werden und aus einem Profilstab durch Ablängen und entsprechendes Verbinden entstehen kann.

Diese Aufgabe wird durch die im Kennzeichen des Anspruches 1 angegebenen Merkmale gelöst.

Vorteilhafte Ausführungen und Weiterbildungen der Erfindung sind in den Ansprüchen 2 bis 4 angegeben.

Die Vorteile der Transportsicherung nach der Erfindung sind insbesondere in der erleichterten Handhabung im Einsatzbetrieb zu sehen. Außerdem werden Reparaturen bei Deformation erleichtert, wobei insgesamt die Bereitstellung dieses Transportsicherungsmittels Runge verbilligt wird.

Anhand der Zeichnung wird ein Ausführungsbeispiel der Transportsicherung nach der Erfindung näher erläutert.

Es zeigt

Fig. 1 einen Teil einer Transportsicherung im Schnitt,

Fig. 2 eine komplette Transportsicherung im Schnitt,

Fig. 3 die Transportsicherung nach der Fig. 2 in Seitenansicht und

Fig. 4 eine andere Transportsicherung in perspektivischer Ansicht.

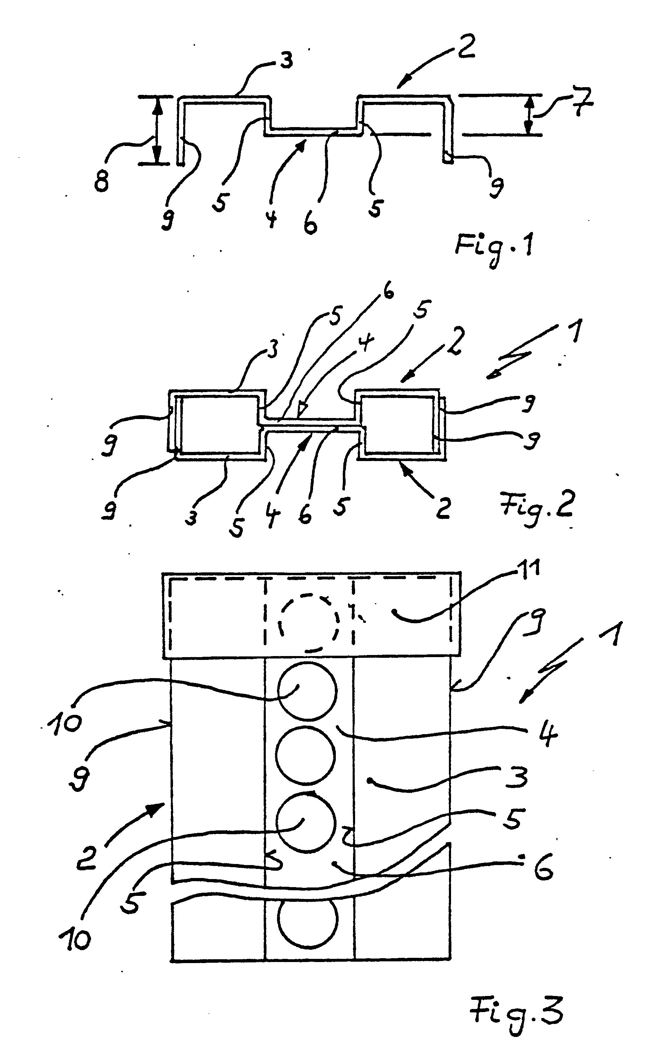

Wie aus den Fig. 1 bis 3 hervorgeht, besteht eine Transportsicherung in Form von Rungen 1 aus zwei jeweils gleichen C-Profilen 2, wobei das C-Profil 2 in Mehrfachlängen der Runge 1 zweckmäßigerweise im Rollformverfahren aus Bandmaterial herstellbar ist. Die C-Profile 2 weisen jeweils mittig im Steg 3 angeordnete C-förmige Rücksprünge 4 mit Schenkeln 5 und Steg 6 auf, die eine Tiefe 7 entsprechend der halben Länge 8 der Schenkel 9 haben (Fig. 1).

Die Fig. 2 zeigt eine einsatzfertige Runge 1 durch Zusammensetzung von zwei gleichen C-Profilen 2, wobei jeweils die entsprechenden Schenkel 9 der C-Profile 2 und die Rücken der Stege 6 der C-förmigen Rücksprünge 4 aneinander liegen und die Schenkel 9 jeweils durch geeignete nicht dargestellte Verbindungselemente verbunden sind.

Wie die Fig. 3 zeigt, weisen die Stege 6 der C-förmigen Rücksprünge 4 zur Gewichtsentlastung Lochungen 10 auf, die gleichzeitig die Möglichkeit der Ladegutsicherung durch Seile, Drähte, Haken oder dergleichen auf einfache Weise bieten. Die Lochungen 10 können dabei bereits in das noch zu C-Profilen 2 zu formende Bandmaterial eingestanzt sein.

Schließlich weist die Runge 1 am freien Ende noch eine aufgesteckte Schutzkappe 11 auf, die Schutz gegen Verletzungen, eindringendes Regenwasser und Schmutz bietet.

Die Schutzkappe 11 kann aus Kunststoff, Metall oder ähnlichem Werkstoff bestehen.

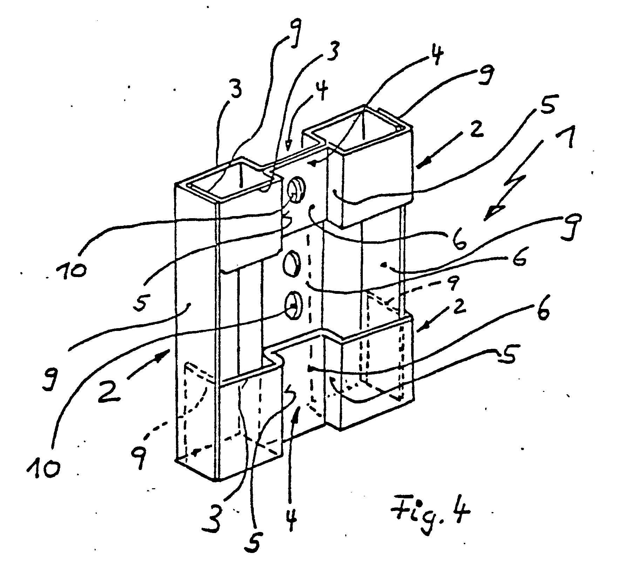

Selbstverständlich ist es möglich, nur an den statisch notwendigen Stellen der Runge 1 C-Profile 2 zusammenzusetzen, wie die Fig. 4 zeigt.

1 Runge
2 C-Profil
3 Steg
4 Rücksprünge
5 Schenkel
6 Steg
7 Tiefe
8 Länge
9 Schenkel
10 Lochungen
11 Schutzkappe

## Ansprüche

1. Transportsicherung in Form von Rungen zwei zusammengesetzten für Eisenbahnwagen, Lastkraftwagen oder dergleichen, wobei die Rungen aus Profilen bestehen, dadurch gekennzeichnet, daß die Rungen (I) jeweils spiegelsymmetrisch in mindestens zwei Achsrichtungen gestaltet sind und jeweils aus gleichen C-Profilen (2) mit jeweils einem mittig im Steg (3) angeordneten C-förmigen Rücksprung (4) mit Schenkeln (5) und Steg (6), der eine Tiefe (7) entsprechend der halben Länge (8) des Schenkels (9) des C-Profils (2) aufweist, zusammengesetzt ist, wobei jeweils die entsprechenden Schenkel (9) der C-Profile (2) und die Rücken der Stege (6) der C-förmigen Rücksprünge (4) aneinander liegen und verbunden sind.

2. Transportsicherung nach Anspruch I, dadurch gekennzeichnet, daß die C-Profile (2) aus Metall oder Kunststoff bestehen.

3. Transportsicherung nach den Ansprüchen I und 2, dadurch gekennzeichnet, daß die Stege (6) der C-förmigen Rücksprünge (4) Lochungen (I0) aufweisen.

4. Transportsicherung nach Anspruch I, dadurch gekennzeichnet, daß die Rungen (I) jeweils am freien Ende mit einer Schutzkappe (II) versehen sind.

## Claims

1. Transport safety device in the form of stakes (1) for railway carriages or wagons, lorries or the like, wherein the stakes comprise two profiles put together, characterised in that the stakes (1) comprise identical C-profiles (2) each having disposed centrally in the web (3) a C-shaped offset (4) having limbs (5) and a web (6), which has a depth (7) corresponding to half the length (8) of the limb (9) of the C-profile (2), wherein the corresponding limbs (9) of the C-profile (2) and the backs of the webs (6) of the C-shaped offsets (4) abut against and are connected to one another respectively.

2. Transport safety device as in claim 1, characterised in that the C-profiles (2) are made of metal or plastics.

3. Transport safety device as in claims 1 and 2, characterised in that the webs (6) of the C-shaped offsets (4) have perforations (10).

4. Transport safety device as in claim 1, characterised in that the free end of each stake (1) is provided with a protective cap (11).

## Revendications

1. Dispositif de maintien d'un chargement sous la forme de ridelles (1) pour wagons de chemin de fer, véhicules utilitaires ou analogues, dans lequel les ridelles consistent en deux profilés assemblés, caractérisé en ce que les ridelles (1) sont formées chacune par assemblage de profilés en C (2) identiques, avec chacun un retrait (4) en C prévu au milieu de l'âme (3), avec des ailes (5) et une âme (6), qui présente une profondeur (7) correspondant à la demi-longueur (8) de l'aile (9) du profilé en C (2), les ailes (9) correspondantes de chaque profilé en C (2) et les dos des âmes (6) des retraits en C (4) se disposant ensemble et étant reliés.

2. Dispositif de maintien d'un chargement selon la revendication 1, caractérisé en ce que les profilés en C (2) sont en métal ou en matière plastique.

3. Dispositif de maintien d'un chargement selon les revendications 1 et 2, caractérisé en ce que les âmes (6) des retraits en C (4) présentent des perforations (10).

4. Dispositif de maintien d'un chargement selon la revendication 1, caractérisé en ce que les ridelles (1) sont chacunes pourvues d'un capuchon de protection (11) à leur extrémité libre.

Fig.1

Fig.2

Fig.3

4

Fig. 4